(19) Europäisches Patentamt
European Patent Office
Office européen des brevets

(11) **EP 0 560 653 B1**

(12) **FASCICULE DE BREVET EUROPEEN**

(45) Date de publication et mention
de la délivrance du brevet:
**15.10.1997 Bulletin 1997/42**

(51) Int Cl.6: **H02M 1/14**

(21) Numéro de dépôt: **93400566.1**

(22) Date de dépôt: **04.03.1993**

(54) **Procédé de commande d'une charge électromécanique par au moins un convertisseur à commutateur(s) à impulsion et dispositif pour sa mise en oeuvre**

Verfahren zum Steuern einer elektromechanischen Last durch mindestens einen Wandler mit getaktetem Schalter(n) und Vorrichtung für seine Durchführung

Control method for an electromechanical load by at least one converter with pulsed switch(es) and device for its operation

(84) Etats contractants désignés:
**BE DE ES FR GB IT NL**

(30) Priorité: **10.03.1992 FR 9202859**

(43) Date de publication de la demande:
**15.09.1993 Bulletin 1993/37**

(73) Titulaire: **SGS-THOMSON MICROELECTRONICS S.A.**
**94253 Gentilly Cédex (FR)**

(72) Inventeur: **Bourgeois, John Marie c/o**
**SGS-Thomson Microel. INC**
**Schaumburg, Illinois 60173-4941 (US)**

(74) Mandataire: **Michelet, Alain et al**
**Cabinet Harlé et Phélip**
**21 rue de la Rochefoucauld**
**75009 Paris (FR)**

(56) Documents cités:
**WO-A-90/12446**     **DE-A- 3 539 558**
**US-A- 4 638 417**

**Description**

La présente invention est relative à un procédé de commande d'une charge électromécanique par au moins un convertisseur à commutateur(s) à impulsion et à un dispositif pour sa mise en oeuvre.

La commande électronique de charges électromagnétiques telles que notamment des moteurs ou autres, est généralement obtenue par une régulation d'un courant ou d'une tension au moyen de circuits hacheurs. Des signaux tels que des signaux binaires sont envoyés sur des commutateurs à impulsion, qui développent sur les charges électromécaniques des courants ou tensions continus dont le niveau est fonction du signal haché envoyé.

Ces circuits hacheurs induisent dans les charges des ondulations de courant haute fréquence à des fréquences multiples ou sous-multiples des fréquences de fonctionnement des commutateurs électroniques. Or, les charges électromagnétiques se comportent comme des haut-parleurs, de sorte que ces ondulations sont à l'origine d'un bruit acoustique aux fréquences correspondantes.

Certaines solutions ont déjà été envisagées pour éviter la gêne crée par ces bruits acoustiques. Il est notamment déjà connu de faire fonctionner les commutateurs avec des signaux de commutation à des fréquences inaudibles (supérieures à 16 kHz), dans le cas de systèmes mono-commutateurs, ou, dans le cas de systèmes multi-commutateurs, à des fréquences telles que l'ondulation de courant résultante est à une fréquence inaudible.

Ces différentes solutions proposent toutes des commutations à des fréquences relativement élevées et imposent donc l'utilisation de commutateurs rapides à vitesses de commutation élevée, pour lesquels, en outre, des filtrages supplémentaires pour éviter les interférences électroniques sont nécessaires.

Le document DE-A-35.39.558 décrit un générateur de signal d'horloge pour un équipement électrique mettant en oeuvre, soit un circuit analogique avec un générateur de bruits, soit un signal digital avec un générateur aléatoire pour moduler le signal. Le signal d'horloge est associé à une fréquence d'ondulation variable qui est telle que le rayonnement acoustique du générateur a un spectre voisin de celui du bruit de fond de la charge.

Le document WO-90/12.446 est relatif à des régisseurs (controllers) pour charges électriques. Un régisseur comprend un générateur d'ondes électriques et un comparateur. Le générateur produit une sortie de période et d'amplitude variables et le comparateur produit un signal de commande de découpage (chop control), en réponse à une comparaison entre un signal d'entrée et la sortie du générateur. Un tel régisseur diminue le niveau de bruit.

La présente invention propose quant à elle un procédé de commande de charges électromagnétiques commandées par un convertisseur électronique, d'un type nouveau et permettant de pallier les inconvénients des dispositifs de l'art antérieur précités.

Un autre objectif de l'invention est un dispositif correspondant à ce procédé et offrant donc les mêmes avantages.

De façon générale, l'invention propose non pas de rendre les fréquences acoustiques dues aux courants de commutation inaudibles (supérieures à 16 kHz) mais de noyer ces fréquences acoustiques dans le bruit naturel de la charge électromécanique, tout en faisant varier le rapport cyclique des signaux de commutation reçus par le convertisseur. Le spectre de ces fréquences acoustiques de commutation est réparti selon un profil proche de celui de la charge, le procédé conforme à l'invention permettant en outre d'éviter que l'intensité acoustique à ces fréquences de commutation ne soit trop importante.

La présente invention a donc pour objet un procédé de commande d'une charge électromécanique tel que défini par la revendication 1.

Ce procédé est avantageusement complété par les différentes caractéristiques suivantes prises seules ou selon toutes leurs combinaisons techniquement possibles:

- la période de commutation est variable, la moyenne de la période de commutation correspondant à la période d'une fréquence du bruit naturel de la charge;

- une période de commutation comportant un temps de conduction et un temps de blocage, un aléa est introduit au niveau de la période de commutation et/ou du temps de conduction et/ou du temps de blocage;

- pour un niveau de bruit naturel donné de la charge et pour un niveau d'intensité ou de tension de commande de charge donnée, on donne au temps de blocage ou au temps de conduction de chacune des impulsions de commutation une valeur constante fonction à la fois de ce niveau d'intensité ou de tension et de cette période moyenne de commutation, et au temps de blocage ou de conduction complémentaire pour l'impulsion de commutation, une valeur choisie aléatoirement;

- on détermine le rapport cyclique moyen $<d_i>$ souhaité pour le commutateur, on détermine si ce rapport cyclique moyen est supérieur ou inférieur à 50%, et

  . si cette valeur moyenne de rapport cyclique est supérieure à 50%, on donne au temps de conduction d'une impulsion de commutation une valeur aléatoire et au temps de blocage une valeur constante prédéterminée choisie pour que le rapport cyclique prenne la valeur moyenne de $<d_i>$,

  . si cette valeur moyenne de rapport cyclique est inférieure à 50%, on donne au temps de blocage d'une impulsion de commutation une valeur aléatoire et au temps de conduction une valeur constante prédéterminée choisie pour que le rapport cyclique prenne la valeur moyenne de $<d_i>$,

. les temps de conduction et de blocage étant dans les deux cas rapportés à une valeur temporelle telle que la période de commutation moyenne prend une valeur correspondant au bruit naturel de la charge.

- lorsque le rapport cyclique moyen souhaité est supérieur à 50%, la valeur prédéterminée que prend le temps de blocage constant de chaque impulsion de commutation est égal à $(1 - <d_i>) \alpha$ où $\alpha$ est un coefficient de linéarisation;
- lorsque le rapport cyclique moyen du commutateur $<d_i>$ est inférieur à 50%, la valeur prédéterminée que prend le temps de conduction est égale à $<d_i> \alpha$ où $\alpha$ est un coefficient de linéarisation;
- les valeurs aléatoires sont générées par un générateur de nombres aléatoires sur n bits, les valeurs de consigne choisie pour le rapport cyclique moyen étant codées sur n bits.

L'invention a encore pour objet un dispositif tel que défini par la revendication 8.

De préférence, le commutateur à impulsion est à période de commutation variable.

Avantageusement, ce dispositif comporte un générateur de nombres aléatoires relié audit circuit hacheur.

La description qui suit d'un mode de réalisation de l'invention est purement illustrative et non limitative. Elle doit être lue en regard des figures annexées sur lesquelles:

La Figure 1 est une représentation schématique d'un circuit de commande muni d'un dispositif conforme à l'invention;

Les Figures 2a et 2b représentent schématiquement d'une part le signal de commande d'un commutateur à impulsion et d'autre part la tension instantanée et moyenne aux bornes d'une charge électromécanique commandée par un tel commutateur à impulsion.

La Figure 3 illustre schématiquement le déroulement du procédé conforme à l'invention.

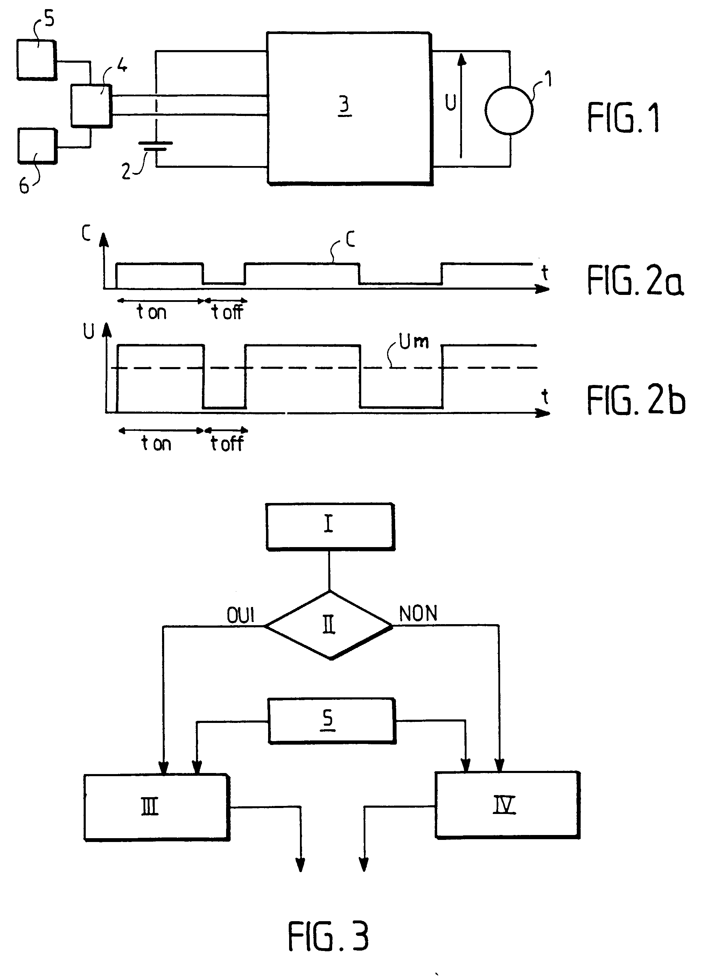

On se réfère à la Figure 1. Sur cette figure a été schématisé un circuit de commande d'une charge 1 électromécanique. Ce circuit de commande, alimenté par une source continue 2, comprend principalement un convertisseur 3 muni en son intérieur de commutateurs à impulsion (non représentés) commandant la charge 1. Ce convertisseur 3 et les commutateurs à impulsion, dont il est muni, reçoivent d'un hacheur 4 des signaux binaires de commutation. Le hacheur 4 est commandé par un générateur 5 de nombres aléatoires sur n bits de

valeur moyenne $2^{n-1}$ et une unité de commande 6.

On se réfère aux Figures 2a et 2b. Sur la Figure 2a a été représenté le signal c reçu par un commutateur $C_i$. Ce signal est un signal binaire cyclique qui prend successivement des valeurs 0 ou 1 pendant respectivement un temps de blocage $t_{off}$ et un temps de conduction $t_{on}$. Ce signal c commande un courant ou une tension d'alimentation de la charge 1. Ainsi que cela a été représenté sur la Figure 2b, la tension moyenne $U_m$ aux bornes de la charge 1 est une tension dont la valeur est proportionnelle au rapport cyclique de commutation:

$$d_i = t_{on}/(t_{on} + t_{off})$$

Le générateur 5 de nombres aléatoires et l'unité de contrôle 6 commande le circuit hacheur 4 pour moduler la largeur d'impulsion des signaux de commande c. Cette modulation est telle que pour un commutateur $C_i$, la période de commutation $T_i = t_{on}+t_{off}$ a une valeur moyenne $<T_i>$ centrée sur le bruit naturel de la charge électromécanique 1, tandis que le rapport cyclique de commutation $d_i$ de ce commutateur $C_i$ a une valeur moyenne $<d_i>$ correspondant à la valeur de rapport cyclique souhaitée pour commander la tension U de la charge 1. Les commutateurs $C_i$ sont choisies de période de commutation $T_i$ et de rapport cyclique de commutation $d_i$ variables.

On se réfère à la Figure 3 illustrant certaines étapes du procédé de réduction de bruit conforme à l'invention.

Dans une première étape I, une valeur $<T_i>$ de période de commutation moyenne est communiquée à l'unité 6 par un opérateur extérieur tel qu'un capteur. Cette valeur est choisie centrée sur le bruit acoustique naturel de la charge électromécanique. Elle peut correspondre à des fréquences de commutation très basses (500 Hz-1 kHz). Une consigne d'entrée $<d_i>$ est également donnée à l'unité 6. Cette consigne d'entrée $<d_i>$ est choisie pour correspondre à la valeur souhaitée pour la moyenne du rapport cyclique du commutateur commandant le niveau du courant ou de la tension dans la charge électromécanique 1. Cette valeur de consigne $<d_i>$ est codée sur n bits, sa valeur maximale étant $2^n$.

Dans une deuxième étape II, on teste si cette consigne de rapport cyclique est ou non supérieure à 50%.

Si cette valeur de consigne est supérieure à 50%, l'unité de commande 6 règle l'horloge du circuit hacheur 4 de façon que le temps moyen $<T_i>$ choisi dans l'étape I corresponde à une valeur codée de

$$+ 2^{n-1} + (2^n - <d_i>)$$

transmis par l'unité 6 ou le générateur 5.

Le circuit hacheur 4 donne alors dans une étape III successivement au temps de conduction $t_{on}$ une valeur aléatoire, qui lui est transmise par le générateur 5 de nombres aléatoires. Le circuit hacheur 4 donne par ailleurs au temps de blocage $t_{off}$ une valeur constante

$$2^n - <d_i>,$$

éventuellement corrigée d'un coefficient $\alpha$ de linéarisation. Cette valeur constante lui est transmise par l'unité 6 de commande.

Si au contraire, la consigne d'entrée $<d_i>$ est inférieure à 50% - cas où le temps de blocage $t_{off}$ est en moyenne plus important que le temps de conduction $t_{on}$- le circuit de commande 6 règle l'horloge du circuit hacheur 4 de façon que le temps moyen $<T_i>$ corresponde à une valeur

$$2^{n-1} + <d_i>$$

transmise par l'unité 6 ou le générateur 5. Dans une étape IV semblable à l'étape III, le circuit hacheur 4 génère des signaux de commutation dont le temps de blocage $t_{off}$ a une valeur aléatoire qui lui est transmise par le générateur 5, tandis que le temps de conduction $t_{on}$ prend une valeur constante $<d_i>$ imposée par l'unité de commande 6. Cette valeur constante est éventuellement corrigée d'un coefficient de linéarisation $\alpha$.

Ainsi, dans le premier cas, la période de commutation prendra une valeur moyenne de

$$2^{n-1} + 2^n - <d_i>;$$

dans le deuxième cas, cette période de commutation a pour valeur

$$<d_i> + 2^{n-1}.$$

Dans les deux cas, compte-tenu du réglage de l'horloge du circuit hacheur au niveau de l'étape II, la moyenne de la période de commutation prend bien la valeur $<T_i>$ initialement choisie.

En cours de fonctionnement, la consigne d'entrée $<d_i>$ est bien entendu susceptible de varier en fonction de la tension ou de l'intensité souhaitée pour commander la charge 1. Il est important de noter qu'il n'existera pas de discontinuité au niveau de la période de commutation où des temps de blocage ou de conduction lors du passage d'une valeur supérieure à une valeur inférieure à 50% pour $<d_i>$ (et réciproquement) puisque la valeur 50% correspond pour un codage sur n bits à $2^{n-1}$, c'est-à-dire la moyenne des nombres aléatoires, avec un aléa sur n bits.

Les signes de référence insérés après les caractéristiques techniques mentionnées dans les revendications, ont pour seul but de faciliter la compréhension de ces dernières, et n'en limitent aucunement la portée.

## Revendications

1. Procédé de commande d'une charge électromécanique (1) commandée par au moins un convertisseur électronique (5) à commutateur(s) à impulsion, ledit convertisseur recevant au moins un signal de commutation binaire défini par son rapport cyclique et sa période de commutation, ledit rapport cyclique étant maintenu à un niveau correspondant à une tension ou à une intensité de courant voulue pour la charge (1), une ondulation étant induite sur ladite tension ou intensité de courant par le ou les signaux de commutation, caractérisé en ce que le rapport cyclique du signal de commutation est variable, la période de commutation et le rapport cyclique étant contrôlés de façon à ce que la fréquence de l'ondulation induite soit noyée dans les fréquences du bruit naturel de la charge (1).

2. Procédé selon la revendication 1, caractérisé en ce que la période de commutation est variable, la moyenne de la période de commutation correspondant à une période d'une fréquence du bruit naturel de la charge.

3. Procédé selon la revendication 2, dans lequel chaque période de commutation comporte un temps de conduction et un temps de blocage, caractérisé en ce qu'un aléa est introduit au niveau de la période de commutation et/ou du temps de blocage et/ou du temps de conduction.

4. Procédé selon la revendication 3, caractérisé en ce que pour un niveau de bruit naturel donné de la charge et pour un niveau d'intensité ou de tension de commande de charge donnée, on donne au temps de blocage ($t_{off}$) ou au temps de conduction ($t_{on}$) de chacune des impulsions de commutation une valeur constante fonction à la fois de ce niveau d'intensité ou de tension et de cette période moyenne de commutation, et au temps de blocage ($t_{off}$) ou de conduction ($t_{on}$) complémentaire pour l'impulsion de commutation, une valeur choisie aléatoirement.

5. Procédé selon la revendication 4, caractérisé en ce qu'on détermine le rapport cyclique moyen $<d_i>$ souhaité pour le commutateur, on détermine si ce rapport cyclique moyen est supérieur ou inférieur à 50%, et

   - si cette valeur moyenne de rapport cyclique est supérieure à 50%, on donne au temps de conduction ($t_{on}$) d'une impulsion de commutation une valeur aléatoire et au temps de blocage ($t_{off}$) une valeur constante prédéterminée choisie pour que le rapport cyclique prenne la valeur moyenne de $<d_i>$,

- si cette valeur moyenne de rapport cyclique est inférieure à 50%, on donne au temps de blocage ($t_{off}$) d'une impulsion de commutation une valeur aléatoire et au temps de conduction ($t_{on}$) une valeur constante prédéterminée choisie pour que le rapport cyclique prenne la valeur moyenne de $<d_i>$,
- les temps de conduction ($t_{on}$) et de blocage ($t_{off}$) étant dans les deux cas rapportés à une valeur temporelle telle que la période de commutation moyenne prend une valeur correspondant au bruit naturel de la charge.

6. Procédé selon la revendication 5, caractérisé en ce que lorsque le rapport cyclique moyen souhaité est supérieur à 50%, la valeur prédéterminée que prend le temps de blocage ($t_{off}$) constant de chaque impulsion de commutation est égal à (1 - $<d_i>$) $\alpha$ où $\alpha$ est un coefficient de linéarisation, et en ce que lorsque le rapport cyclique moyen du commutateur $<d_i>$ est inférieur à 50%, la valeur prédéterminée que prend le temps de conduction ($t_{on}$) est égale à $<d_i>$ $\alpha$ où $\alpha$ est un coefficient de linéarisation.

7. Procédé selon l'une des revendications 3 à 6 précédentes, caractérisé en ce que les valeurs aléatoires sont générées par un générateur de nombres aléatoires sur n bits, les valeurs de consigne choisies pour le rapport cyclique moyen étant codées sur n bits.

8. Dispositif comportant:

- au moins un commutateur à impulsion (3) pour la commande d'une charge (1) électromécanique,
- un circuit hacheur (4) pour générer un signal de commutation commandant ledit commutateur, ledit signal de commutation étant défini par son rapport cyclique et sa période de commutation, ledit rapport cyclique étant maintenu à un niveau correspondant à une tension ou à une intensité voulue pour la charge (1), une ondulation étant induite sur ladite tension ou intensité par le ou les signaux de commutation,
- une unité de commande (6) du circuit hacheur (4), l'unité de commande (6) choisissant la période de commutation et le rapport cyclique du signal de commutation, caractérisée en ce que l'unité de commande (6) produit des variations du rapport cyclique du signal de commutation, et contrôle la période de commutation et le rapport cyclique de façon à ce que la fréquence de l'ondulation induite soit noyée dans les fréquences du bruit naturel de la charge (1).

9. Dispositif selon la revendication 8, caractérisé en ce que le commutateur à impulsion (3) est à période de commutation variable.

10. Dispositif selon la revendication 9, caractérisé en ce qu'il comporte un générateur (5) de nombres aléatoires relié audit circuit hacheur (4).

**Patentansprüche**

1. Verfahren zum Steuern einer elektromechanischen Last (1), die durch wenigstens einen elektronischen Wandler (5) mit Impuls-Schalter(n) gesteuert wird, wobei der Wandler wenigstens ein binäres Schaltsignal empfängt, das durch sein Tastverhältnis und seine Schaltperiode definiert ist, wobei das Tastverhältnis auf einer Größe gehalten wird, der einer Soll-Spannung oder einer Soll-Stromstärke der Last (1) entspricht, wobei durch das oder die Schaltsignal/-e eine Welligkeit in die Spannung oder die Stromstärke eingebracht wird, dadurch gekennzeichnet, daß das Tastverhältnis des Schaltsignals veränderbar ist, wobei die Schaltperiode und das Tastverhältnis derart gesteuert sind, daß die Frequenz der induzierten Welligkeit in den Eigenrauschfrequenzen der Last (1) liegt.

2. Verfahren nach Anspruch 1, dadurch gekennzeichnet, daß die Schaltperiode veränderbar ist, wobei der Mittelwert der Schaltperiode einer Periode einer Eigenrauschfrequenz der Last entspricht.

3. Verfahren nach Anspruch 2, bei dem jede Schaltperiode eine Leitphase und eine Sperrphase hat, dadurch gekennzeichnet, daß ein Zufall in die Schaltperiode und/oder die Sperrphase und/oder die Leitphase eingebracht wird.

4. Verfahren nach Anspruch 3, dadurch gekennzeichnet, daß bei einem gegebenen Eigenrauschpegel der Last und bei einem gegebenen Steuerstromstärke- oder Steuerspannungspegel der Last, der Sperrphase ($t_{off}$) oder der Leitphase ($t_{on}$) jedes Schaltimpulses ein konstanter Wert zugewiesen wird, der gleichzeitig von dem Stromstärkeoder dem Spannungspegel und dieser mittleren Schaltperiode abhängt, und der komplementären Sperrphase ($t_{off}$) oder Leitphase ($t_{on}$) des Schaltimpulses ein zufällig bestimmter Wert zugewiesen wird.

5. Verfahren nach Anspruch 4, dadurch gekennzeichnet, daß das mittlere Soll-Tastverhältnis $<d_i>$ des Schalters bestimmt und festgestellt wird, ob dieses mittlere Tastverhältnis größer oder kleiner 50% ist, und

- wenn dieser Mittelwert des Tastverhältnisses über 50% liegt, wird der Leitphase ($t_{on}$) eines Schaltimpulses ein zufälliger Wert und der Sperrphase ($t_{off}$) ein vorbestimmter konstanter Wert zugewiesen, der derart gewählt ist, daß das Tastverhältnis den Mittelwert $<d_i>$ annimmt,

- wenn dieser Mittelwert des Tastverhältnisses unter 50% liegt, wird der Sperrphase ($t_{off}$) eines Schaltimpulses ein zufälliger Wert und der Leitphase ($t_{on}$) ein vorbestimmter konstanter Wert zugewiesen, der derart gewählt ist, daß das Tastverhältnis den Mittelwert $<d_i>$ annimmt,

- wobei die Leit- ($t_{on}$) und die Sperrphase ($t_{off}$) in beiden Fällen auf einen Zeitwert bezogen sind, so daß die mittlere Schaltperiode einen dem Eigenrauschen der Last entsprechenden Wert annimmt.

6. Verfahren nach Anspruch 5, dadurch gekennzeichnet, daß, wenn das mittlere Soll-Tastverhältnis über 50% liegt, der vorbestimmte Wert, den die konstante Sperrphase ($t_{off}$) jedes Schaltimpulses annimmt, gleich (1 - $<d_i>$) $\alpha$ ist, wobei $\alpha$ ein Linearisierungskoeffizient ist, und daß, wenn das mittlere Tastverhältnis des Schalters $<d_i>$ unter 50% liegt, der vorbestimmte Wert, den die Leitphase ($t_{on}$) annimmt, gleich $<d_i>$ $\alpha$ ist, wobei $\alpha$ ein Linearisierungskoeffizient ist.

7. Verfahren nach einem der vorhergehenden Ansprüche 3 bis 6, dadurch gekennzeichnet, daß die Zufallswerte durch einen n-Bit-Zufallszahlengenerator erzeugt werden, wobei die für das mittlere Tastverhältnis gewählten Sollwerte mit n Bits kodiert sind.

8. Vorrichtung mit

- wenigstens einem Impulsschalter (3) zum Steuem einer elektromechanischen Last (1),

- einer Zerhackerschaltung (4) zum Erzeugen eines den Schalter steuernden Schaltsignals, wobei das Schaltsignal durch sein Tastverhältnis und seine Schaltperiode definiert ist, wobei das Tastverhältnis auf einer Größe gehalten ist, der einer Soll-Spannung oder einer Soll-Stromstärke der Last (1) entspricht, wobei durch das oder die Schaltsignal/-e eine Welligkeit in die Spannung oder die Stromstärke eingebracht ist,

- einer Steuereinheit (6) der Zerhackerschaltung (4), wobei die Steuereinheit (6) die Schaltperiode und das Tastverhältnis des Schaltsignal auswählt,

dadurch gekennzeichnet, daß die Steuereinheit (6) Veränderungen des Tastverhältnisses des Schaltsignals erzeugt und die Schaltperiode und das Tastverhältnis derart steuert, daß die Frequenz der induzierten Welligkeit in den Eigenrauschfrequenzen der Last (1) liegt.

9. Vorrichtung nach Anspruch 8, dadurch gekennzeichnet, daß der Impulsschalter (3) eine variable Schaltperiode hat.

10. Vorrichtung nach Anspruch 9, dadurch gekennzeichnet, daß sie einen mit der Zerhackerschaltung (4) verbundenen Zufallszahlengenerator (5) aufweist.

## Claims

1. A process for controlling an electromechanical load (1) driven by at least one electronic pulse switch converter (5), said converter(s) receiving at least one binary switching signal defined by its cyclic ratio and switching period, said cyclic ratio being maintained at a level corresponding to the voltage or current intensity desired for the load (1), a ripple being induced on said voltage or current intensity by the switching signal(s), characterized in that the switching ratio of the switching signal is variable, the switching period and cyclic ratio of the switching signal being controlled in such a way that the induced ripple frequency is drowned in the natural noise frequencies of the load (1).

2. A process as claimed in claim 1, characterized in that the switching period is variable, the mean of the switching period corresponding to a period of a frequency of the natural noise of the load.

3. A process as claimed in claim 2, characterized in that each switching period comprises a conduction time and a blocking time, wherein a random element is introduced in terms of the switching period and/or of the blocking time and/or of the conduction time.

4. A process as claimed in claim 3, characterized in that for a given natural noise level of the load and for a given load control intensity or voltage level, the blocking time ($t_{off}$) or conduction time ($t_{on}$) of each switching pulse is assigned a constant value according to both this intensity or voltage level and to this mean switching period, a randomly chosen value being assigned to the supplementary blocking time ($t_{off}$) or conduction time ($t_{on}$) for the switching pulse.

5. A process as claimed in claim 4, characterized in that the mean cyclic ratio $<d_i>$ desired for the switch is determined, it then being determined whether this mean cyclic ratio is greater or less than 50 %, and

- if this mean cyclic ratio value is greater than 50 %, the conduction time ($t_{on}$) of a switching pulse is assigned a random value and the blocking time ($t_{off}$) a predetermined constant value chosen in such a way that the cyclic ratio assumes the mean value $<d_i>$,
- if this mean cyclic ratio value is less than 50 %, the blocking time ($t_{off}$) of a switching pulse is assigned a random value and the conduction time ($t_{on}$) a predetermined constant value chosen in such a way that the cyclic ratio assumes the mean value $<d_i>$,
- the conducting time ($t_{on}$) and blocking time ($t_{off}$) being in both cases brought to a temporal value such that the mean switching period assumes a value corresponding to the natural noise of the load.

6. A process as claimed in claim 5, characterized in that the mean cyclic ratio desired is greater than 50 %, the predetermined value assumed by the constant blocking time ($t_{off}$) of each switching pulse is equal to $(1 - <d_i>) \, \alpha$ where $\alpha$ is a linearization coefficient and wherein when the mean cyclic ratio of the switch $<d_i>$ is less than 50 %, the predetermined value assumed by the conduction time ($t_{on}$) is equal to $<d_i> \, \alpha$ where $\alpha$ is a linearization coefficient.

7. A process as claimed in any one of claims 3 to 6, characterized in that the random values are generated by a random number generator over n bits, the reference values chosen for the mean cyclic ratio being encoded over n bits.

8. A device comprising :

- at least one pulse switch (3) to drive an electromechanical load (1),
- a chopper circuit (4) to generate a switching signal to control said switch, said switching signal being defined by its cyclic ratio and switching period, said cyclic ratio being maintained at a level corresponding to a voltage or current level desired for the load (1), a ripple being induced on said voltage or current by the switching signal(s),
- a control unit (6) of the chopper circuit (4), wherein the control unit (6) chooses the cyclic ratio and the switching period of the switching signal,

characterized in that the control unit (6) produces variations of the cyclic ratio of the switching signal, and controls the switching period and the cyclic ratio, so that the frequency of the induced ripple is drowned in the natural noise frequencies of the load (1).

9. A device as claimed in claim 8, characterized in that the pulse switch (3) has a switching period.

10. A device as claimed in claim 9, characterized in that it comprises a random number generator (5) linked to the said chopper circuit (4).

FIG.1

FIG.2a

FIG.2b

FIG.3